# EUROPÄISCHE PATENTSCHRIFT

(11) **EP 2 324 134 B1**
(45) Veröffentlichungstag und Bekanntmachung des Hinweises auf die Patenterteilung: **23.03.2016**
(21) Anmeldenummer: 09781347.1
(22) Anmeldetag: 31.07.2009
(51) Int. Cl.: C22B 7/04, C04B 5/06

(54) **VERFAHREN ZUR HERSTELLUNG VON HÜTTENSAND**
METHOD FOR PRODUCING GRANULATED METALLURGICAL SAND
PROCÉDÉ DE FABRICATION D'UN SABLE DE LATIER GRANULÉ

(30) Priorität: 12.08.2008 DE 102008038692; 28.11.2008 DE 102008059369
(43) Veröffentlichungstag der Anmeldung: 25.05.2011
(73) Patentinhaber: ThyssenKrupp Industrial Solutions AG, 45143 Essen (DE)
(72) Erfinder: KUPPER, Detlev, 48291 Telgte (DE)
(74) Vertreter: Tetzner, Michael
(86) Internationale Anmeldenummer: PCT/EP2009/059939
(87) Internationale Veröffentlichungsnummer: WO 2010/018080

(56) Entgegenhaltungen:
- EP-A- 1 126 039
- EP-A- 1 712 644
- WO-A-99/14381
- WO-A-2007/031825
- JP-A- 11 246 244
- US-A- 4 171 965

## Beschreibung

Die Erfindung betrifft ein Verfahren zur Herstellung von Hüttensand durch Abschrecken und Zerkleinern von Schlacke, die in einem Schmelzreaktor anfällt.

Bei der Herstellung von Portlandzement entstehen aufgrund der hohen Prozesstemperaturen und der im Rohmaterial enthaltenen Carbonate sehr hohe Kohlendioxid-Emissionen in der Größenordnung von etwa 800 kg CO₂/t Portland-Zementklinker. Vor dem Hintergrund einer drohenden Klimaerwärmung werden Bemühungen unternommen, die Emission des Treibhausgases Kohlendioxid zu senken.

Eine Möglichkeit zur Minderung des CO₂-Ausstoßes bei der Zementherstellung besteht darin, einen Teil des Portland-Zementklinkers durch latent hydraulische Zusatzstoffe zu ersetzen. Hierfür bietet sich insbesondere der Hüttensand an, der aus der beim Hochofenprozess entstehenden Schlacke gewonnen werden kann.

Beim bekannten Hochofenprozess wird Eisen durch Reduktion von Eisenoxid gewonnen. Hierzu werden neben oxidischen Eisenerzen Koks und Zuschlagstoffe, wie Quarz und gebrannter Kalk, zur Reaktion gebracht. Das Roheisen und die schwimmende Schlacke werden getrennt aus dem Hochofen abgezogen. Die abgezogene Schlacke wird dann abgeschreckt und in einer Schlackenmahlanlage aufgemahlen.

Nun ist jedoch der Hochofenprozess im Hinblick auf die Gewinnung von Roheisen optimiert, während die Schlacke ein Neben- bzw. Abfallprodukt des Hochofenprozesses darstellt, das zudem nur in begrenzten Mengen anfällt.

Die WO 99/14381 A beschreibt ein Verfahren zum Aufarbeiten von Stahlschlacken und Eisenträgern zur Gewinnung von Roheisen und umweltverträglichen Schlacken. Hierbei werden Stahlwerksschlacke und Eisenerz einem Konverter aufgegeben und darin erhitzt, wobei die Abstichtemperaturen der erzeugten Schlacke und des Roheisens bei 1500° C liegen. Die Schlacke und das Roheisen werden durch Ausgießen des gekippten Konverters im wesentlichen gleichzeitig und vollständig aus dem Konverter abgezogen.

Die WO 2007/031825 A betrifft ein Verfahren zur Verarbeitung einer metallurgischen Rohschlacke mit einem unerwünschten Schwermetallgehalt. Hierbei wird die Rohschlacke mit einem Reduktionsmittel erhitzt und das geschmolzene Metall von der geschmolzenen Schlacke getrennt. Schlacke und Metallschmelze werden im wesentlichen vollständig und gleichzeitig aus dem Ofen abgezogen. Das Verfahren kann chargenweise oder kontinuierlich betrieben werden und strebt eine hohe Schlackenausbeute an, während das zur Stahlerzeugung rezirkulierte Metall ein Nebenprodukt ist.

Die EP-A-1 126 039 beschreibt ein Verfahren zur Behandlung von flüssiger Schlacke und metallischen Filterstäuben. Hierbei wird der abgezogenen flüssigen Schlacke in einer Behandlungsstation ein Kohlenstoffträger sowie Filterstaub zugesetzt, so dass sich im unteren Teil des Behandlungsbehälters eine Metallschmelze bildet, über der sich eine Schicht Schlacke befindet. Aus diesem unteren Teil des Behandlungsbehälters wird sodann zunächst die Schlackenschicht und anschließend das reduzierte Metall in einen Granulator abgezogen.

Weiterhin sind aus der US-A-4 171 965 und der EP-A-1 712 644 Verfahren zur Herstellung von Hüttensand durch Granulieren von Hochofenschlacke bekannt. Die JP 11 246244 A beschreibt ferner eine Anlage zur Gewinnung von Schlacke aus Abfällen.

Der aus der Schlacke gewonnene Hüttensand ist ein wichtiger Bestandteil von Zement. Eine Vergrößerung dieses Bestandteiles im Zement wäre insbesondere wegen der damit erreichten CO₂-Reduzierung sinnvoll und anzustreben.

Der Erfindung liegt daher die Aufgabe zugrunde, ein Verfahren zu entwickeln, das eine besonders wirtschaftliche Herstellung von Hüttensand ermöglicht, so dass der Anteil von Hüttensand im Zement vergrößert und die CO₂-Emissionen bei der Zementherstellung verringert werden können.

Diese Aufgabe wird erfindungsgemäß durch die Merkmale des Anspruches 1 gelöst.

Bei dem erfindungsgemäßen Verfahren zur Herstellung von Hüttensand wird schlackenbildendes Rohmaterial in feinkörniger Form zunächst vorgewärmt und zumindest eine Teilmenge vorcalciniert und dann dem Schmelzreaktor zugeführt, wobei das vorgewärmte und vorcalcinierte Rohmaterial in feinkörniger Form in die Schmelze eingetragen wird und die sich bildende Schlacke aus dem Schmelzreaktor abgezogen wird, während die Schmelze zu mehr als 50% im Schmelzreaktor erhalten bleibt.

Ebenso wie der bekannte Hochofenprozess nutzt auch das neue Verfahren eine Schmelze, über der sich schwimmende Schlacke bildet. Im Unterschied zum bekannten Hochofenprozess wird jedoch erfindungsgemäß schlackenbildendes Rohmaterial zugeführt, und es wird als Hauptprodukt des Schmelzprozesses nicht die Schmelze, sondern die Schlacke aus dem Schmelzreaktor abgezogen, während die Schmelze zu mehr als 50% im Schmelzreaktor erhalten bleibt.

Auf diese Weise lässt sich Hüttensand in großtechnischem Maßstab sehr wirtschaftlich herstellen. Dies wiederum ermöglicht einen höheren Anteil an Hüttensand im Zement, wodurch die CO₂-Emissionen bei der Zementherstellung verringert werden können.

Gemäß einer bevorzugten Ausgestaltung der Erfindung sollen die bei der Herstellung des Hüttensands entstehenden Abgase einer CO₂-Aufbereitung, einer CO₂-Lagerung und/oder einer CO₂-Nutzung/Verwertung zugeführt werden, um dadurch den in die Atmosphäre gelangenden CO₂-Anteil weiter zu verringern.

Die Vorwärmung des schlackenbildenden Rohmaterials kann in zwei separaten Teilmengen erfolgen, wobei die eine Teilmenge mit den Abgasen aus dem Schmelzprozess und die andere Teilmenge mit den Abgasen der Vorcalcination vorgewärmt wird.

Als Verbrennungsluft beim Schmelzprozess und/oder bei der Vorcalcination kann Luft, insbesondere Kühlerabluft, verwendet werden. Luft hat jedoch einen hohen Stickstoffanteil, sodass eine hohe Luftmenge für die Verbrennung erforderlich ist. Eine separate Entsorgung dieser Abgasmenge ist wirtschaftlich nicht durchführbar. Es ist daher erstrebenswert, die CO₂-Konzentration im Abgas zu erhöhen, um dadurch eine wirtschaftliche Aufbereitung, Lagerung bzw. Nutzung/Verwertung zu ermöglichen.

Eine Möglichkeit zur Erhöhung der CO₂-Konzentration im Abgas besteht darin, dass man bei der Herstellung des Hüttensandes Verbrennungsluft einsetzt, die einen Sauerstoffgehalt von wenigstens 75, vorzugsweise wenigstens 90 mol% aufweist. Eine derartige Verbrennungsluft kann dabei sowohl beim Vorcalcinieren als auch beim Schmelzprozess eingesetzt werden. Allein durch die Maßnahme kann die CO₂-Konzentration im Abgas auf mehr als 70% gesteigert werden.

Die für die Aufrechterhaltung der Schmelze erforderliche Energiezufuhr erfolgt durch Zugabe von Brennstoff in die Schmelze. Bei dem oben beschriebenen Verfahren entstehen etwa 60% der CO₂-Emissionen aus dem im Rohmaterial enthaltenen Kalkstein, während etwa 40% aus der Verbrennung hervorgehen. Um die durch den Brennstoff hervorgerufenen CO₂-Emissionen zu senken, kann man beim Schmelzprozess Wasserstoff als Brennstoff einsetzen.

Das bei der Herstellung von Hüttensand entstehende CO₂-haltige Abgas kann weiterhin einer CO₂-Wäsche unterzogen oder entfeuchtet, verdichtet und ggf. einer Tieftemperatur-Phasentrennung unterworfen werden.

Eine weitere Möglichkeit besteht darin, das CO₂-haltige Abgas als Nährstoff einem Bioreaktor zuzuführen, wobei Pflanzen, insbesondere Algen, als Brennstoff, insbesondere im Schmelzprozess, genutzt werden.

Die abgezogene Schlacke wird so rasch abgekühlt, dass zumindest der überwiegende Teil der Schlacke glasig erstarrt. Dabei ist es denkbar, dass die Abkühlung in zwei Stufen erfolgt, wobei zunächst mit einem flüssigen Kühlmedium und anschließend mit einem gasförmigen Kühlmedium gekühlt wird.

Im Anschluss daran wird die abgekühlte Schlacke fein zerkleinert, wobei vorzugsweise zumindest ein Teil der abgekühlten Schlacke bis auf eine Feinheit von mindestens 3.500 bis 8.000 Blaine, vorzugsweise von mindestens 10.000 Blaine, zerkleinert wird.

Für das Verfahren zur Herstellung von Zement, der als Bestandteile zumindest Klinker und Hüttensand enthält, wird zumindest ein Teil des nach dem obigen Verfahren hergestellten Hüttensandes verwendet, wobei zumindest ein Teil des gesamten Hüttensandes die im vorhergehenden Absatz angegebene Feinheit besitzt.

Der Schmelzprozess wird gemäß einer bevorzugten Ausführungsvariante unter reduzierender Atmosphäre und mit einer metallischen Schmelze betrieben.

Die für die Herstellung des Hüttensands erforderliche Verbrennungsluft kann mittels entstehender Prozessgase vorgewärmt werden.

Weitere Vorteile und Ausgestaltungen der Erfindung werden im Folgenden anhand der Beschreibung einiger Ausführungsbeispiele und der Zeichnung näher erläutert.

In der Zeichnung zeigen
- Fig. 1: ein Blockschaltbild einer Anlage zur Herstellung von Hüttensand gemäß einem ersten Ausführungsbeispiel,
- Fig. 2: ein Blockschaltbild einer Anlage zur Herstellung von Hüttensand gemäß einem zweiten Ausführungsbeispiel,
- Fig. 3: ein Blockschaltbild einer Anlage zur Herstellung von Hüttensand gemäß einem dritten Ausführungsbeispiel,
- Fig. 4: ein Blockschaltbild einer Anlage zur Herstellung von Hüttensand gemäß einem vierten Ausführungsbeispiel,
- Fig. 5: ein Blockschaltbild einer Anlage zur Herstellung von Hüttensand gemäß einem fünften Ausführungsbeispiel und
- Fig. 6: ein Blockschaltbild einer Anlage zur Herstellung von Hüttensand gemäß einem sechsten Ausführungsbeispiel.

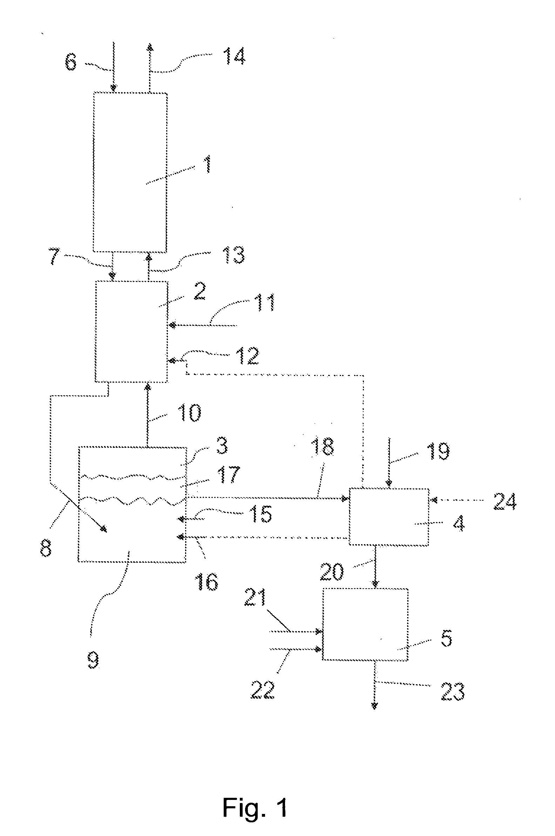

Die in Fig. 1 dargestellte Anlage zur Herstellung von Hüttensand enthält einen Vorwärmer 1 sowie einen Calcinator 2 für schlackenbildendes, feinkörniges Rohmaterial, einen Schmelzreaktor 3, eine Kühleinrichtung 4 sowie eine Zerkleinerungsanlage 5.

Das schlackenbildende Rohmaterial 6 wird dem Vorwärmer 1 aufgegeben, gelangt dann als vorgewärmtes Rohmaterial 7 in den Calcinator 2 und wird schließlich als vorcalciniertes Rohmaterial 8 in die Schmelze 9 des Schmelzreaktors 3 eingetragen. Die Abgase 10 des Schmelzreaktors 3 werden dem Calcinator 2 zugeleitet, dem außerdem Brennstoff 11 sowie Verbrennungsluft 12 zugeführt wird, die als warme Abluft von der Kühleinrichtung 4 kommen kann. Die Abgase 13 des Calcinators treten in den Vorwärmer 1 ein, dessen Abgase 14 in bekannter Weise entstaubt werden können.

Dem Schmelzreaktor 3 wird Brennstoff 15 sowie Verbrennungsluft 16 zugeführt, die wiederum als warme Abluft von der Kühleinrichtung 4 kommen kann. Die Verbrennungsluft im Calcinator bzw. die Verbrennungsluft 16 im Schmelzreaktor könnte aber auch durch reinen Sauerstoff oder mit Sauerstoff angereicherte Verbrennungsluft gebildet werden.

Die sich im Schmelzreaktor bildende, schwimmende Schlacke 17, die sich aufgrund unterschiedlicher Dichte von der metallischen Schmelze 9 separiert, wird als eigentliches Nutzprodukt aus dem Schmelzreaktor 3 abgezogen (Pfeil 18), während die Schmelze 9 zu mehr als 90% im Schmelzreaktor 3 zurückbleibt, wobei eventuell auftretende kleinere Schmelzverluste oder Schmelzüberschüsse durch geeignete Materialzu- bzw. -abfuhr ausgeglichen werden.

Die aus dem Schmelzreaktor abgezogene flüssige Schlacke 17 wird in der Kühleinrichtung 4 so rasch abgekühlt, dass zumindest der überwiegende Teil der Schlacke glasig erstarrt. Die abgezogene Schlacke kann dabei in zwei Stufen abgekühlt werden, wobei zunächst mit einem flüssigen Kühlmedium 19, beispielsweise Wasser, und anschließend mit einem gasförmigen Kühlmedium 24, insbesondere Luft, gekühlt wird.

Der so hergestellte, überwiegend amorphe Hüttensand 20 wird dann in der Zerkleinerungsanlage 5 fein zerkleinert, wobei die Zerkleinerung des Hüttensandes entweder separat oder gemeinsam mit der Zerkleinerung von Klinker 21 und sonstigen Additiven 22 erfolgen kann. Aus der Zerkleinerungsanlage 5 wird normgerechter Zement 23 mit der gewünschten Kornverteilung und mit einem hohen Anteil von Hüttensand abgezogen. Bei separater Zerkleinerung werden die Bestandteile des Zements in einem Mischer zu Zement homogenisiert.

Bei den im Folgenden zu beschreibenden Ausführungsbeispielen werden für gleiche Anlagenteile dieselben Bezugszeichen verwendet, um das Verständnis zu erleichtern.

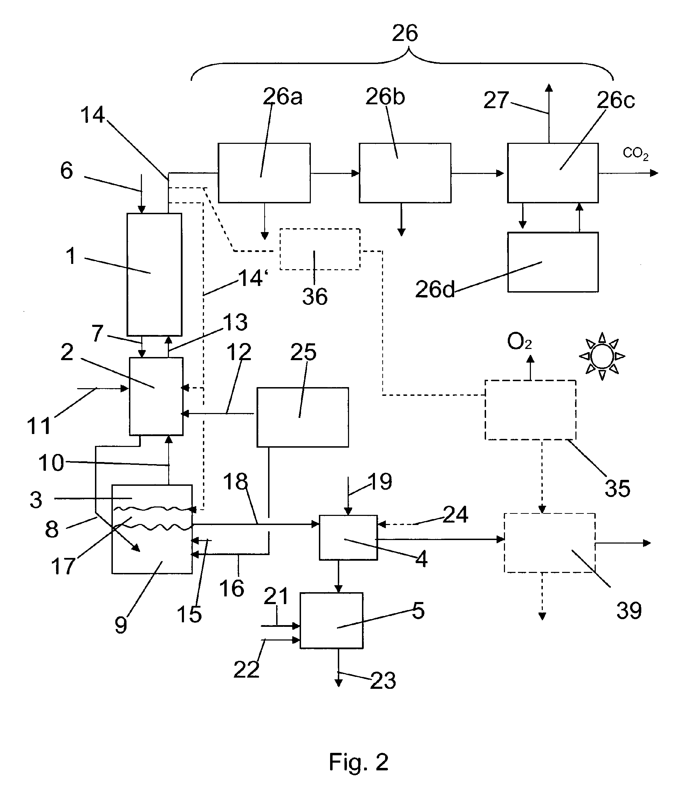

Die Anlage zur Herstellung von Hüttensand gemäß dem zweiten Ausführungsbeispiel (Fig. 2) unterscheidet sich vom ersten Ausführungsbeispiel zum einen in der Bereitstellung einer Luftzerlegungsanlage 25 und einer CO₂-Aufbereitungseinrichtung 26 und zum anderen durch eine Rückführung eines Teils 14' der Abgase des Vorwärmers 1 in den Calcinator 2 und/oder den Schmelzreaktor 3.

Die Luftzerlegungsanlage 25 dient zur Herstellung von Sauerstoff, der als Verbrennungsluft 12 im Calcinator 2 und/oder als Verbrennungsluft 16 im Schmelzreaktor 3 verwendet werden kann. Dabei ist denkbar, dass die Verbrennungsluft aus reinem Sauerstoff besteht oder einen Sauerstoffgehalt von wenigstens 75 mol%, vorzugsweise wenigstens 95 mol% aufweist.

Die Verwendung von Sauerstoff bzw. mit Sauerstoff angereicherter Luft reduziert die für die Verbrennung erforderliche Verbrennungsluftmenge erheblich, da der Anteil an Stickstoff entsprechend reduziert ist. Allein durch diese Maßnahme lässt sich die CO₂-Konzentration im Abgas 14 von etwa 25% auf 70 bis 75% gegenüber einer mit normaler Verbrennungsluft betriebenen Anlage steigern.

Ist der Calcinator 2 als Flugstromcalcinator ausgebildet, ist eine Mindestmenge an Trägergas erforderlich, die sich üblicherweise aus dem Abgas 10 des Schmelzreaktors und der Verbrennungsluft 12 zusammensetzt. Verkleinert sich jedoch die Verbrennungsluftmenge durch den hohen Sauerstoffgehalt, kann es erforderlich sein, dass eine Teilmenge 14' des Abgases des Vorwärmers 1 oder auch eine Teilmenge des Abgases des Calcinators zum Calcinator 2 rezirkuliert wird, um dort eine ausreichende Trägergasmenge bereitzustellen.

Wird der Calcinator 2 jedoch als Wirbelschichtreaktor ausgebildet, kann die Trägergasmenge so weit reduziert werden, dass keine Rezirkulation von Calcinator- und/oder Vorwärmerabgasen erforderlich ist. Dies hat den Vorteil, dass die durch die Rezirkulation bedingte Recarbonatisierung verhindert werden kann.

Der Vorwärmer 1 wird zweckmäßigerweise durch einen Zyklonwärmetauscher gebildet, bei dem es allerdings unvermeidlich zu signifikanten Mengen an Falschluft bei der Vorwärmung kommt. Dennoch lässt sich bei dieser Variante eine CO₂-Konzentration im Abgas 14 von etwa 70 bis 75% erreichen. Beim derzeitigen Stand der Entwicklung ist eine CO₂-Speicherung/Lagerung jedoch erst ab Konzentrationen von wenigstens 96% sinnvoll.

Zu diesem Zweck wird das Abgas 14 einer CO₂-Aufbereitungseinrichtung 26 zugeführt, wobei das Abgas aufeinander folgend eine Einrichtung 26a zur Entfeuchtung, eine Einrichtung 26b zur Verdichtung und eine Einrichtung 26c zur Entgasung durchläuft. Eine weitere Aufkonzentrierung des Abgases könnte mit einer Einrichtung 26d zur Tieftemperatur-Phasentrennung erreicht werden. Das am Ende dieses Prozesses vorliegende CO₂-haltige Gas ist so hoch aufkonzentriert, dass eine wirtschaftliche Lagerung und/oder anderweitige Nutzung/Verwertung möglich ist. Das verbleibende Restgas 27 wird in die Atmosphäre geleitet oder anderweitig verwendet.

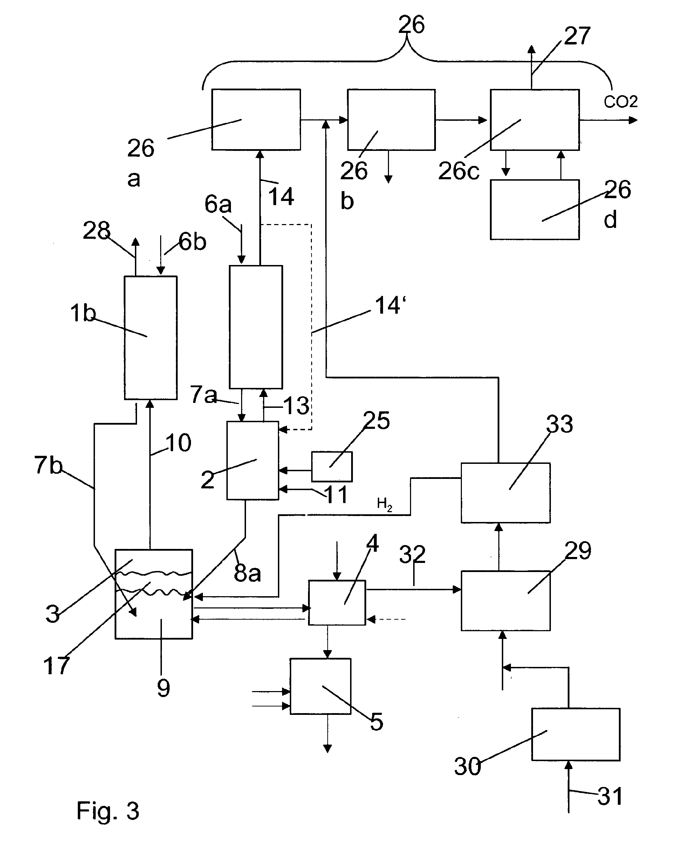

Im dritten Ausführungsbeispiel (Fig. 3) sind zwei Vorwärmer 1a, 1b vorgesehen, wobei der eine Vorwärmer 1a an die Abgasleitung des Calcinators 2 und der andere Vorwärmer 1b an die Abgasleitung des Schmelzreaktors 3 angeschlossen ist. Der Vorwärmer 1b wird somit lediglich von den Abgasen 10 des Schmelzreaktors 3 durchströmt, während der Vorwärmer 1a mit den Abgasen 13 des Calcinators 2 beaufschlagt wird. Dementsprechend wird auch das schlackenbildende Rohmaterial in zwei Teilmengen 6a und 6b den beiden Vorwärmern 1a und 1b aufgegeben. Während die im Vorwärmer 1b vorgewärmte Teilmenge des Rohmaterials 7b direkt in den Schmelzreaktor 3 geleitet wird, wird die im Vorwärmer 1a vorgewärmte Teilmenge 7a zunächst noch im Calcinator 2 vorcalciniert und gelangt als vorcalcinierte Rohmaterialteilmenge 8a in den Schmelzreaktor 3.

Wird der Calcinator 2 bei dieser Variante zudem mit reinem Sauerstoff oder zumindest mit einer mit sauerstoffangereicherten Verbrennungsluft betrieben, entsteht bereits im Abgas 13 des Calcinators bzw. im Abgas 14 des Vorwärmers 1a eine sehr hohe CO₂-Konzentration Da das Rohmaterial auf zwei Vorwärmer aufgeteilt wird, ergeben sich entsprechend kleinere Vorwärmer, sodass sich auch der Falschlufteintritt etwa halbieren wird. Dies hat zur Folge, dass sich bei etwa gleichem thermischen Energieverbrauch höhere CO₂-Konzentrationen einstellen, die über 80% liegen können.

Durch die Verwendung von reinem Sauerstoff oder einer mit Sauerstoff angereicherten Verbrennungsluft reduziert sich wiederum die Verbrennungsluftmenge durch den hohen Sauerstoffgehalt, sodass es erforderlich sein kann, dass eine Teilmenge 14' des Abgases des Vorwärmers 1 oder auch eine Teilmenge des Abgases des Calcinators zum Calcinator 2 rezirkuliert wird, um dort eine ausreichende Trägergasmenge bereitzustellen.

Allerdings entweicht beim Ausführungsbeispiel gemäß Fig. 3 das Abgas 28 des mit den Abgasen des Schmelzreaktors 3 durchströmten Vorwärmers 1b ungehindert. Der CO₂-Anteil im Abgas des Vorwärmers 1b könnte aber dadurch reduziert werden, dass im Vorwärmer 1b bevorzugt keine Carbonate, sondern nur Al₂O₃-, FeO₃- und SiO₂-Träger wärmebehandelt werden. Darüber hinaus besteht die weitere Möglichkeit, den Schmelzreaktor 3 mit Wasserstoff zu betreiben, um dadurch den CO₂-Anteil aufgrund des Brennstoffes zu vermeiden.

Der Wasserstoff könnte in einem Dampfreformer 29 mittels Erdgas und in einer Einrichtung 30 pyrolysierter Kohle 31 hergestellt werden. Der Dampfreformer wird dabei zweckmäßigerweise mit der Abwärme 32 der Kühleinrichtung betrieben. In einem nachfolgenden CO₂-Abscheider 33 wird der Wasserstoff vom Kohlendioxid getrennt.

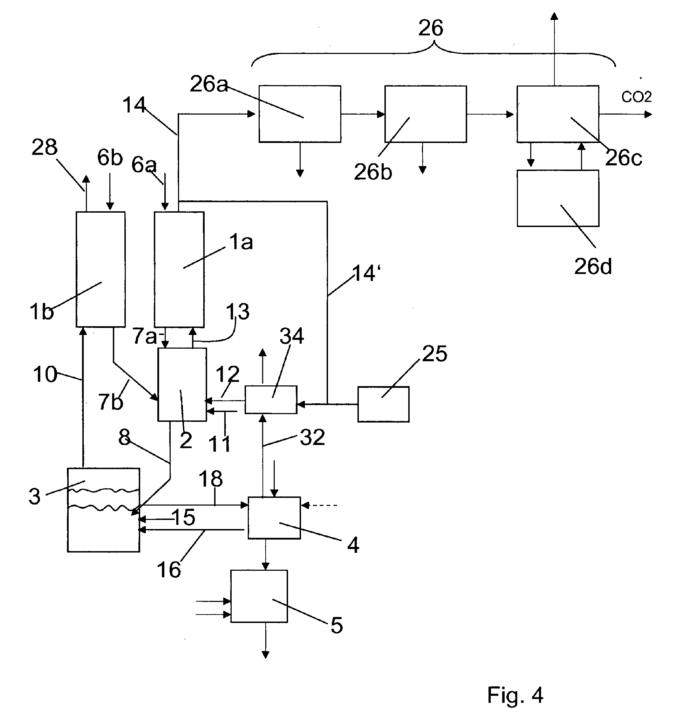

Fig. 4 zeigt eine alternative Anlage mit zwei Vorwärmern 1a und 1b wobei der Vorwärmer 1a von den Abgasen 13 des Calcinators 2 und der Vorwärmer 1b von den Abgasen 10 des Schmelzreaktors 3 durchströmt wird. Im Unterschied zum Ausführungsbeispiel gemäß Fig. 3 gelangt jedoch die im Vorwärmer 1b vorgewärmte Teilmenge 7b des Rohmaterials nicht direkt in den Schmelzreaktor 3, sondern wird zunächst im Calcinator 2 zusammen mit der anderen im Vorwärmer 1a vorgewärmten Teilmenge 7a des Rohmaterials vorcalciniert.

In Fig. 4 wird weiterhin die Möglichkeit aufgezeigt, dass die im Calcinator 2 eingesetzte Verbrennungsluft mit der Abwärme 32 der Kühleinrichtung 4 in einem Wärmetauscher 34 vorgewärmt werden kann. Das rezirkulierte Abgas 14' kann sowohl als Verbrennungsluft 12 im Calcinator (wie dargestellt), als auch als Kühlluft in der Kühleinrichtung 4 eingesetzt werden.

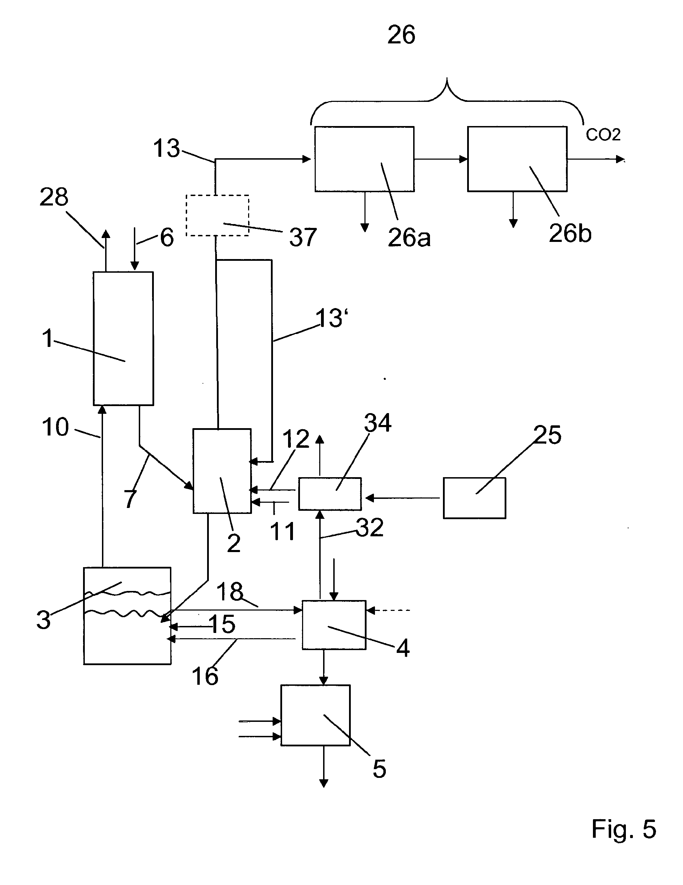

Das Prinzip der Vorwärmung der Verbrennungsluft 12 für den Calcinator 2 wird auch im Ausführungsbeispiel gemäß Fig. 5 beibehalten. Hier ist allerdings wiederum nur ein Vorwärmer 1 vorgesehen, der aber im Gegensatz zu den beiden ersten Ausführungsbeispielen lediglich vom Abgas 10 des Schmelzreaktors 3 durchströmt wird. Das dem Vorwärmer 1 aufgegebene Rohmaterial 6 wird als vorgewärmtes Rohmaterial 7 dem Calcinator 2 zugeführt, der mit vorgewärmter Verbrennungsluft 12, Brennstoff 11 und einem rückgeführten Teil 13' des Calcinatorabgases 13 beaufschlagt wird. Bei dieser Variante wird das Abgas 13 des Calcinators unmittelbar nach dem Calcinator der CO₂-Aufbereitungseinrichtung 26 zugeführt, sodass ein etwaiger Falschlufteintrag im Bereich des Vorwärmers für dieses Abgas vermieden wird. Da hier keine Abkühlung des Abgases durch einen Vorwärmer stattfindet, kann es erforderlich sein, dass eine Kühleinrichtung 37, beispielsweise in Form eines Dampfreformers, zwischengeschaltet wird. Die Kühleinrichtung kann dann beispielsweise zur Stromerzeugung oder zur Wasserstoffherstellung genutzt werden.

Dadurch lassen sich CO₂-Konzentrationen im Abgas 13 von 96% und mehr erreichen, sodass lediglich eine Entfeuchtung und eine anschließende Verdichtung erforderlich ist, wenn das CO₂ gelagert werden soll. Selbstverständlich kann das Gas auch einer anderen Nutzung oder Verwertung zugeführt werden. Allerdings muss man bei dieser Variante berücksichtigen, dass ein Teil der CO₂-Menge nach dem Vorwärmer 1 ungemindert entweicht. Um diese CO₂-Emissionen zu verringern, kann der Schmelzreaktor 3 mit Wasserstoff betrieben werden. Dieser Brennstoff wäre auch beim Ausführungsbeispiel gemäß Fig. 4 eine gute Möglichkeit, um den CO₂-Anteil aufgrund des Brennstoffes zu vermeiden. Die hohen Temperaturen des Abgases 28 bedingen jedoch einen deutlich erhöhten Wärmeverbrauch.

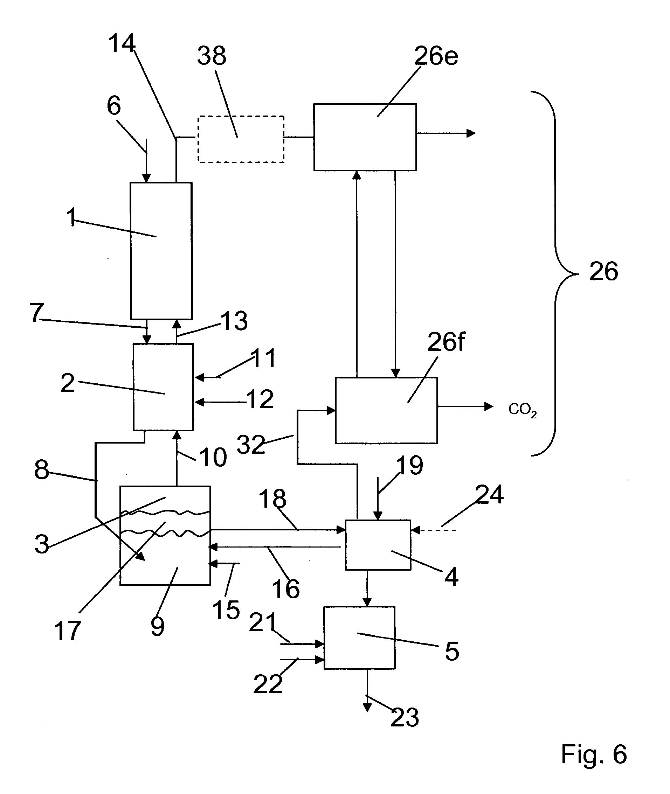

Fig. 6 zeigt schließlich eine Anlage, bei der die CO₂-Aufbereitungseinrichtung 26 durch eine Einrichtung 26e zur CO₂-Wäsche des Abgases 14 und eine Einrichtung 26f zur Regeneration des verwendeten Lösungsmittels gebildet wird. Die Einrichtung 26f kann dabei durch die Abwärme 32 der Kühleinrichtung 4 betrieben werden. Zweckmäßigerweise ist der Einrichtung 26e zur CO₂-Wäsche eine Einrichtung 38 zur Entschwefelung vorgeschaltet.

Da die Herstellung von Hüttensand wesentlich weniger CO₂-Emissionen hervorruft als die Klinkerherstellung, führt eine Erhöhung des Hüttensandanteils im Zement bereits zu einer deutlichen Reduzierung der CO₂-Emissionen. Werden darüber hinaus die in den verschiedenen Ausführungsbeispielen aufgezeigten Möglichkeiten einzeln oder in Kombination miteinander genutzt, können die CO₂-Emissionen bei der Hüttensandherstellung zusätzlich gemindert werden. In hoch konzentrierter Form lässt sich das CO₂-haltige Gas in entsprechenden Lagerstätten lagern.

Es besteht aber auch die Möglichkeit, das CO₂-haltige Abgas für die Herstellung von Brennstoff zu nutzen, der idealerweise als Brennstoff bei der Herstellung von Hüttensand Verwendung findet. Hierzu kann ein mit Pflanzen, insbesondere Algen, bestückter Bioreaktor vorgesehen werden, durch den die CO₂-haltigen Abgase geleitet werden. In Verbindung mit Licht wandeln die Algen das CO₂ durch Photosynthese in Biomasse und Sauerstoff um. Die Biomasse kann dann als Brennstoff im Schmelzreaktor 3 eingesetzt werden. Bei dieser Art der Nutzung der CO₂-haltigen Abgase ist prinzipiell eine CO₂-Aufbereitung nicht erforderlich, sodass das Abgas direkt nach dem Calcinator bzw. dem Vorwärmer in den Bioreaktor geleitet werden kann. In Fig. 2 ist ein solcher Bioreaktor 35 gestrichelt angedeutet. Er kann aber auch bei den anderen Ausführungsbeispielen zur Anwendung kommen.

Optional kann das Abgas durch eine Entstaubungseinrichtung 36 vor Eintritt in den Bioreaktor 35 vom Staub befreit werden. Da die Algen naturgemäß nach der Ernte eine hohe Feuchtigkeit aufweisen, kann optional die Wärme des im Kühler 24 erwärmten gasförmigen Kühlmediums genutzt werden, um die Algen in einem Trockner 39 zu entfeuchten.

## Patentansprüche

1. Verfahren zur Herstellung von Hüttensand durch Abschrecken und Zerkleinern von Schlacke (17), die in einem Schmelzreaktor (3) anfällt, **dadurch gekennzeichnet, dass** schlackenbildendes Rohmaterial (6) in feinkörniger Form zunächst vorgewärmt und zumindest eine Teilmenge vorcalciniert und dann dem Schmelzreaktor (3) zugeführt wird, dass das vorgewärmte und vorcalcinierte Rohmaterial (8) in feinkörniger Form in die Schmelze (9) eingetragen wird und dass die sich bildende Schlacke (17) aus dem Schmelzreaktor (3) abgezogen wird, während die Schmelze (9) zu mehr als 50% im Schmelzreaktor (3) erhalten bleibt.

2. Verfahren nach Anspruch 1, **dadurch gekennzeichnet, dass** die Schmelze zu mehr als 90% im Schmelzreaktor (3) erhalten bleibt.

3. Verfahren nach Anspruch 1, **dadurch gekennzeichnet, dass** die bei der Herstellung des Hüttensands entstehenden Abgase (13, 14) einer CO₂-Aufbereitung, einer CO₂-Lagerung und/oder einer CO₂-Nutzung/Verwertung zugeführt werden.

4. Verfahren nach Anspruch 1, **dadurch gekennzeichnet, dass** bei der Herstellung des Hüttensands Verbrennungsluft (12, 16) eingesetzt wird, die einen Sauerstoffgehalt von wenigstens 75 mol% aufweist.

5. Verfahren nach Anspruch 3, **dadurch gekennzeichnet, dass** beim Vorcalcinieren des vorgewärmten Rohmaterials Verbrennungsluft (12) eingesetzt wird, die einen Sauerstoffgehalt von wenigstens 75 mol% aufweist.

6. Verfahren nach Anspruch 1, **dadurch gekennzeichnet, dass** beim Schmelzprozess Verbrennungsluft (16) eingesetzt wird, die einen Sauerstoffgehalt von wenigstens 75 mol% aufweist.

7. Verfahren nach Anspruch 1, **dadurch gekennzeichnet, dass** die zur Aufrechterhaltung der Schmelze (9) erforderliche Energiezufuhr durch Zugabe von Brennstoff (15) in die Schmelze erfolgt.

8. Verfahren nach Anspruch 1, **dadurch gekennzeichnet, dass** das schlackenbildende Rohmaterial in wenigstens zwei Teilmengen (6a, 6b) separat voneinander vorgewärmt und wenigstens eine der Teilmengen (7a) vorcalciniert wird, bevor das Rohmaterial dem Schmelzprozess zugeführt wird.

9. Verfahren nach Anspruch 8, **dadurch gekennzeichnet, dass** die eine Teilmenge (6b) mit Abgasen (10) aus dem Schmelzprozess und die andere Teilmenge (6a) mit Abgasen (13) der Vorcalcination vorgewärmt wird.

10. Verfahren nach Anspruch 1, **dadurch gekennzeichnet, dass** die abgezogene Schlacke (17) so rasch abgekühlt wird, dass zumindest der überwiegende Teil der Schlacke glasig erstarrt.

11. Verfahren nach Anspruch 10, **dadurch gekennzeichnet, dass** die abgezogene Schlacke (17) in zwei Stufen abgekühlt wird, wobei zunächst mit einem flüssigen Kühlmedium (19) und anschließend mit einem gasförmigen Kühlmedium (24) gekühlt wird.

12. Verfahren zur Herstellung von Zement, der als Bestandteile zumindest Klinker und Hüttensand enthält, **dadurch gekennzeichnet, dass** zumindest ein Teil des verwendeten Hüttensandes ein nach dem Verfahren gemäß einem oder mehreren der vorhergehenden Ansprüche hergestellter Hüttensand ist und dass zumindest ein Teil des gesamten Hüttensandes die Feinheit von mindestens 3500 - 8.000 Blaine, vorzugsweise von mindestens 10.000 Blaine besitzt.

13. Verfahren nach einem oder mehreren der vorhergehenden Ansprüche, **dadurch gekennzeichnet, dass** die Schlacke (17) in einem reduzierend betriebenen Schmelzprozess mit metallischer Schmelze (9) anfällt.

## Claims

1. A method for producing granulated blast-furnace slag, which is obtained by quenching and comminuting slag (17) that accumulates in a smelting reactor (3), **characterised in that** slag-forming raw material (6) in fine-grained form is first pre-heated and at least a partial quantity is pre-calcined and then fed to the smelting reactor (3), **in that** the pre-heated and pre-calcined raw material (8) is incorporated in fine-grained form into the melt (9) and the generated slag (17) is withdrawn from the smelting reactor (3) whilst more than 50% of the melt (9) remains in the smelting reactor (3).

2. A method according to claim 1, **characterised in that** the more than 90% of the melt remains in the smelting reactor (3).

3. A method according to claim 1, **characterised in that** the exhaust gases (13, 14) evolving during the manufacture of the granulated blast-furnace slag are fed to a CO₂ processing stage, a CO₂ storage stage and/or a CO₂ utilization/recovery stage.

4. A method according to claim 1, **characterised in that** combustion air (12, 16) having an oxygen content of at least 75 mol % is used in the manufacture of the granulated blast-furnace slag.

5. A method according to claim 3, **characterised in that** combustion air (12) that has an oxygen content of at least 75 mol % is used in the pre-calcining of the pre-heated raw material.

6. A method according to claim 1, **characterised in that** combustion air (16) that has an oxygen content of at least 75 mol % is used in the smelting process.

7. A method according to claim 1, **characterised in that** the energy supply required to maintain the melt (9) is effected by adding fuel (15) to the melt.

8. A method according to claim 1, **characterised in that** the slag-forming raw material is pre-heated in at least two partial quantities (6a, 6b) separately from one another and at least one of the partial quantities (7a) is pre-calcined before the raw material is supplied to the smelting process.

9. A method according to claim 8, **characterised in that** one partial quantity (6b) is pre-heated with exhaust gases (10) from the smelting process and the other partial quantity (6a) is pre-heated with exhaust gases (13) from the pre-calcination.

10. A method according to claim 1, **characterised in that** the slag (17) drawn off is cooled so quickly that at least the majority of the slag solidifies in a vitreous state.

11. A method according to claim 10, **characterised in that** the slag (17) drawn off is cooled in two stages, firstly with a liquid cooling medium (19) and subsequently with a gaseous cooling medium (24).

12. A method for manufacturing cement, which contains at least clinker and granulated blast-furnace slag as constituents, **characterised in that** at least a part of the granulated blast-furnace slag used is a granulated blast-furnace slag manufactured by the method according to one or more the preceding claims and **in that** at least a part of the total granulated blast-furnace slag has a Blaine fineness number of at least 3,500-8,000, preferably a Blaine fineness number of at least 10,000.

13. A method according to one or more of the preceding claims, **characterised in that** the slag (17) accumulates in a smelting process carried out under reducing conditions with metal melt (9).

## Revendications

1. Procédé de fabrication de laitier granulé par refroidissement immédiat et broyage de scories (17) formées dans un réacteur de fusion (3)
**caractérisé en ce que** la matière brute de fine granulométrie (6), formant les scories, est tout d'abord préchauffée et au moins une partie de celle-ci est pré-calcinée, ce après quoi ladite matière brute est conduite au réacteur de fusion (3), q u e la matière brute de fine granulométrie, préchauffée et pré-calcinée (8), est ajoutée à 1a matière en fusion (9) et q u e les scories (17), qui se forment, sont retirées du réacteur de fusion (3) tandis que plus de 50 % de la matière en fusion (9) demeure dans le réacteur de fusion (3).

2. Procédé selon la revendication 1,
**caractérisé en ce que** plus de 90 % de la matière en fusion demeure dans le réacteur de fusion (3).

3. Procédé selon la revendication 1,
**caractérisé en ce que** les gaz d'échappement (13, 14) résultant de la fabrication du laitier granulé sont conduits à une installation de traitement de CO₂, une installation de stockage de CO₂ et / ou une installation d'utilisation / de valorisation de CO₂.

4. Procédé selon la revendication 1,
**caractérisé en ce que**, lors de la fabrication du laitier granulé, on utilise de l'air de combustion (12, 16) ayant une teneur en oxygène d'au moins 75% mol.

5. Procédé selon la revendication 3,
**caractérisé en ce que,** lors de la pré calcination de la matière brute préchauffée, on utilise de l'air de combustion (12) ayant une teneur en oxygène d'au moins 75% mol.

6. Procédé selon la revendication 1,
**caractérisé en ce que**, lors du processus de fusion, on utilise de l'air de combustion (16) présentant une teneur en oxygène d'au moins 75% mol.

7. Procédé selon la revendication 1,
**caractérisé en ce que** l'apport d'énergie nécessaire au maintien de la fusion (9) est effectué par l'adduction de combustible (15) dans la matière en fusion.

8. Procédé selon la revendication 1,
**caractérisé en ce que** la matière brute formant les scories est préchauffée séparément en au moins deux quantités partielles (6a, 6b) et qu'au moins l'une des quantités partielles (7a) est pré calcinée avant que ladite matière brute soit soumise au processus de fusion.

9. Procédé selon la revendication 8,
**caractérisé en ce qu'**une quantité partielle (6b) est préchauffée avec des gaz d'échappement (10) provenant du processus de fusion et que l'autre quantité partielle (6a) est préchauffée avec des gaz d'échappement (13) résultant de la pré-calcination.

10. Procédé selon la revendication 1,
**caractérisé en ce que** la scories extraite (17) est rapidement refroidie et qu'au moins la majeure partie des scories se vitrifie.

11. Procédé selon la revendication 10,
**caractérisé en ce que** les scories (17) extraites sont refroidies en deux étapes, sachant que le refroidissement est effectué d'abord au moyen d'un agent de refroidissement liquide (19) et ensuite au moyen d'un agent de refroidissement gazeux (24).

12. Procédé de fabrication de ciment contenant, en tant que composant, au moins du clinker et du laitier granulé,
**caractérisé en ce qu'**au moins une partie du laitier granulé utilisé est un laitier granulé fabriqué par un procédé selon l'une ou plusieurs des revendications précédentes et qu'au moins une partie de la totalité du laitier présente une finesse d'au moins 3.500 à 8.000 Blaine, de préférence d'au moins 10.000 Blaine.

13. Procédé selon l'une ou plusieurs des revendications précédentes,
**caractérisé en ce que** les scories (17) se forment au cours d'un processus de fusion, exploité en réduction, avec fonte métallique (9).
